# EUROPEAN PATENT SPECIFICATION

(11) **EP 2 223 420 B1**
(45) Date of publication and mention of the grant of the patent: **04.09.2013**
(21) Application number: 08868479.0
(22) Date of filing: 19.11.2008
(51) Int. Cl.: H02M 3/155, H02M 3/28, G11C 16/30, H02M 3/156, H02J 1/10, G06F 1/32

(54) **MULTI-REGULATOR POWER DELIVERY SYSTEM FOR ASIC CORES**
MULTIREGLER-STROMVERSORGUNGSSYSTEM FÜR ASIC-KERNE
SYSTÈME DE DÉLIVRANCE DE PUISSANCE À RÉGULATEURS MULTIPLES POUR NOYAUX ASIC

(30) Priority: 21.12.2007 US 5124; 21.12.2007 US 5144
(43) Date of publication of application: 01.09.2010
(73) Proprietor: SanDisk Technologies Inc., Plano, Texas 75024 (US)
(72) Inventor: NGUYEN, Daniel, P., Campbell CA 95008 (US); CHI, Steve, X., Cupertino CA 95014 (US); LAI, Po-Shen, San Jose CA 95138 (US)
(74) Representative: Hitchcock, Esmond Antony
(86) International application number: PCT/US2008/083958
(87) International publication number: WO 2009/085439

(56) References cited:
- US-A1- 2006 244 482
- US-A1- 2007 018 621
- LI Y W ET AL: "A Fully Integrated On-Chip DC-DC Conversion and Power Management System", IEEE JOURNAL OF SOLID-STATE CIRCUITS, IEEE SERVICE CENTER, PISCATAWAY, NJ, USA, vol. 39, no. 3, 1 March 2004 (2004-03-01), pages 443-451, XP011108373, ISSN: 0018-9200, DOI: 10.1109/JSSC.2003.822773
- KA NANG LEUNG ET AL: "A capacitor-free cmos low-dropout regulator with damping-factor-control frequency compensation", IEEE JOURNAL OF SOLID-STATE CIRCUITS, IEEE SERVICE CENTER, PISCATAWAY, NJ, USA, vol. 38, no. 10, 1 October 2003 (2003-10-01), pages 1691-1702, XP011101734, ISSN: 0018-9200, DOI: 10.1109/JSSC.2003.817256
- GEORGE PATOUNAKIS ET AL.: 'A fully integrated on-chip DC-DC conversion and power management system' IEEE JOURNAL OF SOLID-STATE vol. 39, no. 3, March 2004, pages 443 - 451, XP011108373
- KA NANG LEUNG ET AL.: 'A capacitor-free CMOS low-dropout regulator with damping-factor- control frequency compensation' IEEE JOURNAL OF SOLID-STATE vol. 38, no. 10, October 2003, pages 1691 - 1702, XP011101734

## Description

### TECHNICAL FIELD

The present disclosure relates generally to an ASIC core or similar electronic circuit that can be powered by various power regulator technologies depending upon the actual application in which it is used.

### BACKGROUND

An ASIC (Application Specific Integrated Circuit) is a semiconductor device designed for a particular application. ASICs may include virtually any collection of circuits known. For example, they are used in consumer memory devices such as those used with cameras, music players, navigation devices and the like. They are also used in many other types of electronic devices and may be highly specialized to a particular task or set of tasks.

An ASIC core is a defined function to be performed by circuitry which has been designed and verified as a standalone entity and is available in an ASIC function library for a particular process technology. Each ASIC core is an element whose performance and function are understood and which can be, essentially, used as a building block in constructing an ASIC chip design. An ASIC core may be implemented as a function plus a predefined physical layout or standard cell, a function plus a physical layout to be implemented by the ASIC vendor, or as a function embodied in a standard technology-dependent gate-level net list to be fully integrated by the customer.

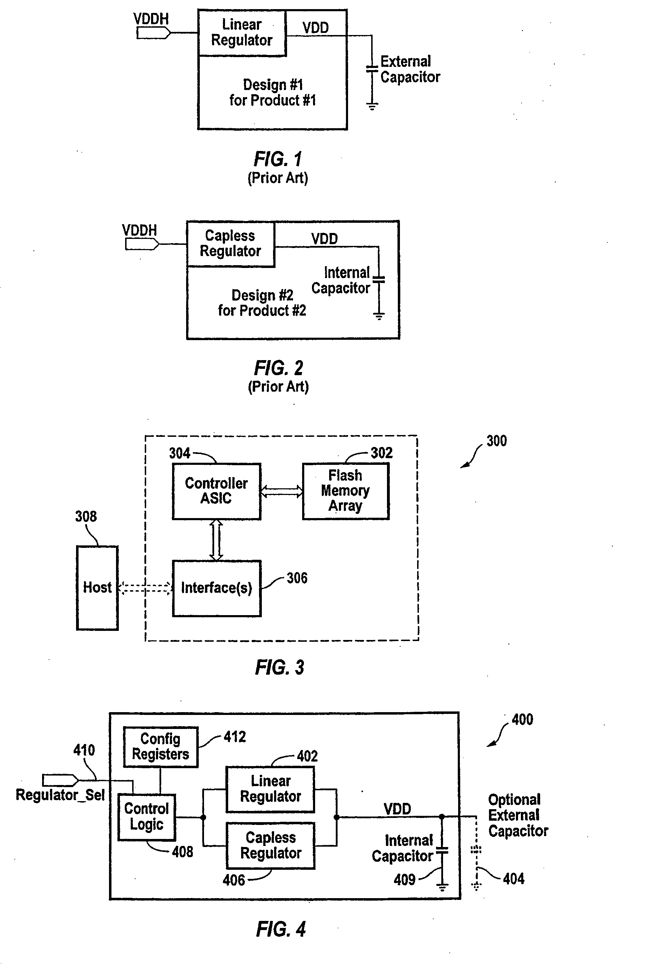

ASIC cores, when implemented as real circuits, require regulated power in order to operate. Typically they are powered by one of the available various regulator technologies depending upon the needs of the circuit. For example, for applications requiring extremely low quiescent and active operating current but which can tolerate the use of an external (i.e., relatively large) capacitor, a linear (e.g., low dropout (LDO)) regulator is highly suitable. Such an approach is used, for example, in micro secure digital (SD) memory cards and is illustrated in, block diagram form in FIG. 1. On the other and, if board space (or other physical space) is at a premium and higher quiescent and active operating currents are tolerable, then a capless regulator having no external capacitor may be a better solution. This situation is often encountered in high-end memory card applications (e.g., Memory Stick-type Flash memory cards, and the like) and is illustrated in block diagram form in FIG. 2.

The design, validation and construction of ASIC chips represents a significant investment for an electronic product manufacturer. It would be desirable to reduce such costs to the extent possible.

### SUMMARY

In one aspect, an electronic product is disclosed that includes an application specific integrated circuit (ASIC) device which includes in its circuitry both a linear regulator module configured to be coupled to an optional external capacitance and a capless regulator module coupled to internal capacitance of the electronic product. Control logic of the ASIC device is responsive to a regulator selection signal for selecting one of the linear regulator module and the capless regulator module for use in powering the ASIC device. The control logic may select the linear regulator module for certain times of operation and the capless regulator module for other times of operation or it may select one or the other for all times of operation.

In another aspect, a method for operating an electronic product is disclosed, where the electronic product has an application specific integrated circuit (ASIC) device which includes in its circuitry both a linear regulator module configured to be coupled to an optional external capacitance and a capless regulator module coupled to internal capacitance of the electronic product. The method may utilize control logic of the ASIC device responsive to a regulator selection signal for selecting one of the linear regulator module and the capless regulator module for use in powering the ASIC device. The control logic may select the linear regulator module for certain times of operation and the capless regulator module for other times of operation or it may select one or the other for all times of operation.

### BRIEF DESCRIPTION OF THE DRAWINGS

The accompanying drawings, which are incorporated into and constitute a part of this specification, illustrate one or more examples of embodiments and, together with the description of example embodiments, serve to explain the principles and implementations of the embodiments.

FIG. 1 is a schematic block diagram for a first electronic product powered by a linear voltage regulator employing an external (relatively large) capacitance in accordance with the known art.

FIG. 2 is a schematic block diagram for a second electronic product powered by a linear voltage regulator employing an internal (relatively small) capacitance in accordance with the know art.

FIG. 3 is a schematic block diagram of an example memory device including a flash memory array, a controller ASIC device and interface(s) to a host device.

FIG. 4 is a schematic block diagram for a power supply portion of a third electronic product selectively powerable by a linear regulator module or a capless regulator module in accordance with one embodiment.

FIG. 5 is a schematic block diagram of a linear regulator module in accordance with one embodiment.

FIG. 6 is a schematic block diagram of a capless regulator module in accordance with one embodiment.

FIG. 7 is a process flow diagram illustrating a method in accordance with one embodiment.

### DETAILED DESCRIPTION

Example embodiments are described herein in the context of an electronic product including an ASIC device. Those of ordinary skill in the art will realize that the following description is illustrative only and is not intended to be in any way limiting. Other embodiments will readily suggest themselves to such skilled persons having the benefit of this disclosure. Reference will now be made in detail to implementations of the example embodiments as illustrated in the accompanying drawings. The same reference indicators will be used throughout the drawings and the following description to refer to the same or like items.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

In accordance with this disclosure, the components, process steps, and/or data structures described herein may be implemented using various types of operating systems, computing platforms, computer programs, and/or general purpose machines, e.g., in a controller of non-volatile memory device. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein. Where a method comprising a series of process steps is implemented by a computer or a machine and those process steps can be stored as a series of instructions readable by the machine, they may be stored on a tangible medium such as a computer memory device (e.g., ROM (Read Only Memory), PROM (Programmable Read Only Memory), EEPROM (Electrically Eraseable Programmable Read Only Memory), FLASH Memory, and the like), magnetic storage medium (e.g., tape, magnetic disk drive, and the like), optical storage medium (e.g., CD-ROM, DVD-ROM, paper card, paper tape and the like) and other types of program memory.

In accordance with one example embodiment, the invention may be used in a memory device useable with consumer electronic equipment such as computers, digital cameras, digital music players, navigation equipment, communications equipment, and the like. It may also be employed in other electronic products as will now be apparent to those of ordinary skill in the art. FIG. 3 illustrates a typical system block diagram of such a memory device. In the example memory device 300 of FIG. 3 a flash memory array 302 is controlled by a controller device 304 implemented as an ASIC device. Interface circuitry 306 is coupled to the controller 304 and provides connectivity to conventional host devices 308 to which memory device 300 may be coupled.

In the example memory device context, controller 304 is typically powered by an external device, such as the host device 308 and includes power supply circuitry such as that illustrated in FIGS. 1 and 2 in order to condition electrical power provided for use by its circuitry.

Turning now to FIG. 4, in accordance with one embodiment, a power circuit 400 including a linear regulator module 402 (which requires coupling to an external-to-the-ASIC capacitor 404 of relatively high capacitance (on the order of one or more microfarads of capacitance)) as well as a "capless" regulator module 406 (which requires no external capacitor and makes do with a very small discrete decoupling capacitor or with the capacitance inherent in the circuitry of the ASIC 408 (on the order of half to a few nanofarads of capacitance)) both provided on the ASIC. An ASIC built in accordance with this concept may now be used in more than one application and the costs of development of the ASIC may be spread over a much larger potential market. For example, one ASIC may be used to build memory devices compatible with the micro SD standard as well as memory devices compatible with the Memory Stick standard even though such disparate devices would use different capacitor arrangements. External capacitors may be employed, or not, as required by the electrical design, without any need to do more than tell the controller ASIC 304.

So called "capless" regulators are well known in the art. For example, an integrated linear regulator using only a 0.6 nF decoupling capacitor is described in detail in Hazucha et al., Area-Efficient Linear Regulator With Ultra-Fast Load Regulation, IEEE Journal of Solid State Circuits, Vol. 40, No. 4 (April, 2005). Such circuits use extremely small capacitance - either provided by discrete but low-valued capacitors integrated onto the semiconductor die along with the rest of the regulator circuitry or the inherent parasitic capacitance of that circuitry. Typically these capacitances range from roughly 0.5 nF to a few nF.

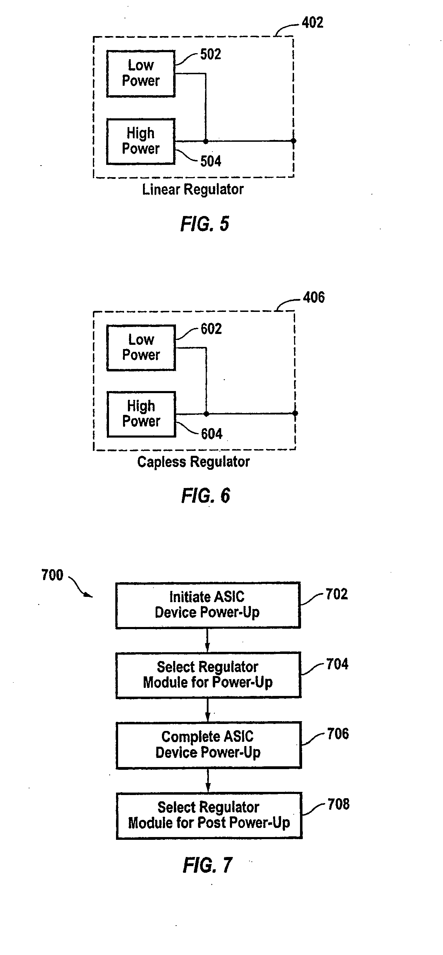

Linear regulator module 402 is depicted in some more detail in FIG. 5 where it is illustrated to comprise a low-power sub-module 502 (for providing relatively low power in a standby mode, for example) and a high-power sub module 504 (for providing relatively high power in a regular operating mode). In one example embodiment the low-power sub-module may provide electrical current up to about 5mA and the high-power sub-module may provide electrical current up to about 100mA. One is typically selected for use at a time, or the low-power module may be left on at all times and supplemented by the high-power sub-module when required.

Capless regulator module 406 is depicted in some more detail in FIG. 6 where it is illustrated to comprise a low-power sub-module 602 (for providing relatively low power in a standby mode, for example) and a high-power sub-module 604 (for providing relatively high power in a regular operating mode). In one example embodiment the low-power sub-module may provide electrical current up to about 5mA and the high-power sub-module may provide electrical current up to about 100mA. One is typically selected for use at a time, or the low power module may be left on at all times and supplemented by the high-power sub-module when required.

Selecting which regulator to use is performed as discussed below. In one embodiment the controller may be configured to always select the low-power sub-module 602 of the capless regulator 406 for initial power-up. Then additional control logic selects the linear or capless regulator module for operations following initial power-up. In another embodiment the controller may be configured to select one of the linear or capless regulator modules for initial power-up based upon a configuration pin (e.g., a regulator selection pin 410 (FIG. 4) of controller ASIC 304 is tied to a particular voltage). Then additional control logic selects the linear or capless regulator module for operations following initial power-up. In yet another embodiment the controller may be configured to select one of the linear or capless regulator modules for initial power-up as well as ongoing operation based upon a configuration pin (e.g., a regulator selection pin 410 (FIG. 4) of controller ASIC 304 is tied to a particular voltage).

Referring in more detail to FIG. 4, a control logic block 408 is configured to select one of linear regulator module 402 and capless regulator module 406. This may be responsive to a hard programmed voltage value on the regulator selection pin 410 or a soft-programmed voltage value on regulator selection pin 410. Configuration registers 412 (which may be implemented in the controller or in flash memory array 302) may store information which may be used to determine an initial selection of one of the two regulator modules (and/or low or high power settings of those modules) and/or an after initial power-up selection of one of the two regulator modules (and/or low- or high-power sub-modules of those modules).

In one embodiment since the capless regulator module is stable without external capacitance by default (since it is designed that way), it is automatically selected to initially power the ASIC controller during power-up unless overridden (e.g., by the regulator select pin 410). Once the ASIC controller core voltage is established, a configuration bit may be loaded from the configuration registers 412 by firmware operating controller 304 to select one of the two regulator modules (e.g., by turning one on while turning the other off).

If a capless regulator is used in the product, only internal capacitance is present which is on the order of about 0.5 nF to a few nF (nanofarads). On the other hand, a much larger capacitance on the order of one microfarad will be present if the linear regulator is configured for use in the product (with the presence of an external capacitance). The range of potential capacitance values is then on the order of 200x or more. If not controlled, this means that he slew rate of the core voltage will vary by the same wide margin. It is possible that in one worst case the voltage could ramp up on the order of nanoseconds, triggering an ESD (electrostatic discharge) protection (clamp) device which could effectively prevent the controller from powering up. Alternatively, in another worst case if the ramp rate is too slow, specified minimum thresholds for product wake-up might be violated leading the host to conclude that the device is inoperative. This is solved in one embodiment by using by default the low-power sub-module 602 of the capless regulator module 402 (which avoids an ESD clamp) unless overridden by one of the techniques discussed above (where the circuitry is empirically determined to ramp too slowly with the low-power sub-module 602 of the capless regulator module 402).

FIG. 7 is a process flow diagram illustrating a method 700 in accordance with one embodiment. At block 702 the power-up of the ASIC device is initiated. At block 704 regulator module for use during the power-up phase is selected as discussed in more detail above. At block 706 the ASIC device completes its power-up phase - this is accomplished when the core ASIC voltage stabilizes after power-up. At block 708 a regulator module for use during the post-power-up phase is selected as discussed in more detail above.

Accordingly, a single ASIC device may now be fabricated and used in a wider array of products increasing its utility and decreasing overall development and per-part costs.

## Claims

1. An electronic apparatus, comprising:
an application specific integrated circuit, hereinafter referred to as an ASIC device (400);
a linear regulator (402) module configured to be optionally coupled in operation to an external-fo-the ASIC device (400) capacitor (4040 via a node;
a capless regulator module (406) coupled to internal capacitance (409) of the ASIC (400) device via the node; and
control logic (408) executable by the ASIC device (400), the control logic responsive to a regulator selection signal (410) for selecting one of the linear regulator module (402) and the capless regulator module (406) for use in powering the ASIC device (400);
wherein the ASIC device (400) is initially configured to use a default selection of one of the linear regulator module (402) or the capless regulator module (406) prior to the completion of initial power-up of at least a portion the ASIC device (400).

2. The apparatus of claim 1, wherein the linear regulator module (402) includes at least a first (502) and a second (504) linear regulator sub-module, the first linear regulator sub-module (502) configured to provide up to a first level of electrical current and the second linear regulator sub-module (504) configured to provide up to a second level of electrical current.

3. The apparatus of claim 2, wherein the second level of electrical current is greater than the first level of electrical current.

4. The apparatus of claim 1, wherein the regulator selection signal (410) is communicated to the control logic (408) with a regulator selection pin.

5. The apparatus of claim 4, wherein the regulator selection signal is permanently fixed to a particular voltage level.

6. The apparatus of claim 1, wherein the regulator selection signal (410) is obtained from a pre-programmed configuration register accessible by the ASIC device (400).

7. A method for operating an electronic apparatus, the apparatus including an application specific integrated circuit, hereinafter referred to as an ASIC device (400), a linear regulator module (402) configured to optionally coupled to an external-to-the ASIC device (400) capacitor (404) via a node and a capless regulator module (406) coupled to an internal capacitance (409) of the electronic product via the node, the method comprising:
applying power to the ASIC device (400) to initiate power-up of the ASPIC device (400);
selecting one of the linear regulator module (402) or the capless regulator module (406) to provide power to the ASIC device (400) during power-up of the ASIC device (400).
completing the power-up of the ASIC device (400); and
choosing one of the linear regulator (402) or the capless regulator (406) module to provide power to the ASIC device after power-up of the ASIC device;
wherein the ASIC device (400) is initially configured to use a default selection of one of the linear regulator module (402) or the capless regulator module (406) prior to the completion of initial power-up of at least a portion the ASIC device (400).

8. The memory of claim 7, wherein the capless regulator module (406) includes at least a first (602) and a second (604) capless regulator sub-module, the first capless regulator sub-module (602) configured to provide up to a first level of electrical current and the second capless regulator sub-module (604) configured to provide up to a second level of electrical current, and in cases where the capless regulator module is selected, the selecting further comprises:
selecting the first capless regulator sub-module (602) of the capless regulator module for powering the ASIC device during power-up.

9. The method of claim 7, wherein the linear regulator module (402) includes at least a first (502) and a second (504) linear regulator sub-module, the first linear regulator sub-module (502) configured to provide up to a first level of electrical current and the second linear regulator sub-module (504) configured to provide up to a second level of electrical current, and wherein in cases where the linear regulator module (402) is chosen, the choosing further comprises:
choosing the first linear regulator sub-module (502) of the linear regulator module (402) for powering the ASIC device (400) during power-up.

10. The method of claim 8 or 9, wherein the first level of electrical current is less than the second level of electrical current.

11. The method of claim 7, wherein the selecting is responsive to a state of a pin coupled to the ASIC device (400).

12. The method of claim 7, wherein the choosing is responsive to a stored state of a configuration register accessible by the ASIC device (400).

## Patentansprüche

1. Elektronische Vorrichtung, umfassend:
eine ASIC (Application Specific Integrated Circuit) (400);
ein zur wahlweisen Kopplung im Betrieb mit einem außerhalb der ASIC (400) liegenden Kondensator (404) über einen Knoten konfiguriertes lineares Reglermodul (402);
ein mit der inneren Kapazität (409) der ASIC (400) über den Knoten gekoppeltes deckelloses Reglermodul (406); und
eine von der ASIC (400) ausführbare Steuerungslogik (408), wobei die Steuerungslogik auf ein Auswahlsignal des Reglers (410) zur Auswahl eines vom linearen Reglermodul (402) und dem deckellosen Reglermodul (406) zur Stromversorgung der ASIC (400) reagiert;
wobei die ASIC (400) zunächst zur Verwendung einer standardmäßigen Wahl eines vom linearen Reglermodul (402) und dem deckellosen Reglermodul (406) vor dem Abschluss der Ersteinschaltung mindestens eines Teils der ASIC (400) konfiguriert ist.

2. Vorrichtung nach Anspruch 1, wobei das lineare Reglermodul (402) mindestens ein erstes (502) und ein zweites (504) lineares Regler-Untermodul umfasst, wobei das erste Regler-Untermodul (502) derart konfiguriert ist, dass es bis zu einem ersten elektrischen Strompegel liefert, und das zweite lineare Regler-Untermodul (504) derart konfiguriert ist, dass es bis zu einem zweiten elektrischen Strompegel liefert.

3. Vorrichtung nach Anspruch 2, wobei der zweite elektrische Strompegel größer ist als der erste elektrische Strompegel.

4. Vorrichtung nach Anspruch 1, wobei das Regler-Auswahlsignal (410) der Steuerungslogik (408) mittels eines Regler-Auswahlstifts zugeführt wird.

5. Vorrichtung nach Anspruch 4, wobei das Regler-Auswahlsignal auf einem bestimmten Spannungspegel dauerhaft fixiert ist.

6. Vorrichtung nach Anspruch 1, wobei das Regler-Auswahlsignal (410) einem vorprogrammierten Konfigurationsregister entnommen wird, auf das die ASIC (400) zugreifen kann.

7. Verfahren zur Bedienung einer elektronischen Vorrichtung, wobei die Vorrichtung eine ASIC (Application Specific Integrated Circuit) (400), ein zur wahlweisen Kopplung im Betrieb mit einem außerhalb der ASIC (400) liegenden Kondensator (404) über einen Knoten konfiguriertes lineares Reglermodul (402), ein mit der inneren Kapazität (409) des elektronischen Produktes über den Knoten gekoppeltes deckelloses Reglermodul (406) umfasst, wobei das Verfahren die nachfolgenden Schritte umfasst:
Anwenden von Strom auf die ASIC (400) zur Einschaltung der ASIC (400);
Wählen eines vom linearen Reglermodul (402) oder dem deckellosen Reglermodul (406) zur Stromversorgung der ASIC (400) während der Einschaltung der ASIC;
Abschließen der Einschaltung der ASIC (400); und
Wählen eines vom linearen Reglermodul (402) oder dem deckellosen Reglermodul (406) zur Stromversorgung der ASIC nach der Einschaltung der ASIC;
wobei die ASIC (400) zunächst derart konfiguriert ist, dass sie eine standardmäßige Auswahl eines vom linearen Reglermodul (402) oder dem deckellosen Reglermodul (406) vor dem Abschluss der Ersteinschaltung mindestens eines Teils der ASIC (400) verwendet.

8. Speicher nach Anspruch 7, wobei das deckellose Reglermodul (406) mindestens ein erstes (604) und ein zweites (604) deckelloses Regler-Untermodul umfasst, wobei das erste Regler-Untermodul (602) derart konfiguriert ist, dass es bis zu einem ersten elektrischen Strompegel liefert, und das zweite deckellose Regler-Untermodul (604) derart konfiguriert ist, dass es bis zu einem zweiten elektrischen Strompegel liefert, und wenn das deckellose Reglermodul ausgewählt wird, umfasst das Wahlverfahren ferner:
Wählen des ersten deckellosen Regler-Untermoduls (602) des deckellosen Reglermoduls zur Stromversorgung der ASIC bei der Einschaltung.

9. Verfahren nach Anspruch 7, wobei das lineare Reglermodul mindestens ein erstes (402) und ein zweites (504) lineares Regler-Untermodul umfasst, wobei das erste Regler-Untermodul (502) derart konfiguriert ist, dass es bis zu einem ersten elektrischen Strompegel liefert, und das zweite lineare Regler-Untermodul (504) derart konfiguriert ist, dass es bis zu einem zweiten elektrischen Strompegel liefert, und wenn das lineare Reglermodul (402) ausgewählt wird, umfasst das Wahlverfahren ferner:
Wählen des ersten linearen Regler-Untermoduls (502) des linearen Reglermoduls (402) zur Stromversorgung der ASIC (400) bei der Einschaltung.

10. Verfahren nach Anspruch 8 oder 9, wobei der erste elektrische Strompegel niedriger ist als der zweite elektrische Strompegel.

11. Verfahren nach Anspruch 7, wobei der Wahlvorgang auf einen Zustand eines mit der ASIC (400) gekoppelten Stifts reagiert.

12. Verfahren nach Anspruch 7, wobei der Wahlvorgang auf einen gespeicherten Zustand eines Konfigurationsregisters reagiert, auf das die ASIC (400) zugreifen kann.

## Revendications

1. Appareil électronique, comprenant:
un circuit intégré à application spécifique, ci-après appelé dispositif de circuit ASIC (400) ;
un module de régulateur linéaire (402) configuré de manière à être facultativement couplé, en fonctionnement, à un condensateur (404) externe au dispositif de circuit ASIC (400), par l'intermédiaire d'un noeud;
un module de régulateur sans bouchon (406) couplé à une capacité interne (409) du dispositif de circuit ASIC (400), par l'intermédiaire du noeud; et
une logique de commande (408) exécutable par le dispositif de circuit ASIC (400), la logique de commande répondant à un signal de sélection de régulateur (410) en vue de sélectionner l'un parmi le module de régulateur linéaire (402) et le module de régulateur sans bouchon (406) à utiliser afin d'alimenter le dispositif de circuit ASIC (400) ;
dans lequel le dispositif de circuit ASIC (400) est initialement configuré de manière à utiliser une sélection par défaut de l'un du module de régulateur linéaire (402) ou du module de régulateur sans bouchon (406) avant l'achèvement de la mise sous tension initiale d'au moins une partie du dispositif de circuit ASIC (400).

2. Appareil selon la revendication 1, dans lequel le module de régulateur linéaire (402) inclut au moins un premier sous-module de régulateur linéaire (502) et un second sous-module de régulateur linéaire (504), le premier sous-module de régulateur linéaire (502) étant configuré de manière à fournier jusqu'à un premier niveau de courant électrique et le second sous-module de régulateur linéaire (504) étant configuré de manière à fournir jusqu'à un second niveau de courant électrique.

3. Appareil selon la revendication 2, dans lequel le second niveau de courant électrique est supérieur au premier niveau de courant électrique.

4. Appareil selon la revendication 1, dans lequel le signal de sélection de régulateur (410) est communiqué à la logique de commande (408) par le biais d'une broche de sélection de régulateur.

5. Appareil selon la revendication 4, dans lequel le signal de sélection de régulateur est fixe, de façon permanente, à un niveau de tension spécifique.

6. Appareil selon la revendication 1, dans lequel le signal de sélection de régulateur (410) est obtenu à partir d'un registre de configuration préprogrammé accessible par le dispositif de circuit ASIC (400).

7. Procédé d'exploitation d'un appareil électronique, l'appareil incluant un circuit intégré à application spécifique, appelé ci-après dispositif de circuit ASIC (400), un module de régulateur linéaire (402) configuré de manière à être facultativement couplé à un condensateur (404) externe au dispositif de circuit ASIC (400) par l'intermédiaire d'un noeud, et un module de régulateur sans bouchon (406) couplé à une capacité interne (409) du produit électronique par l'intermédiaire du noeud, le procédé consistant à :
appliquer une puissance au dispositif de circuit ASIC (400) en vue d'initier une mise sous tension du dispositif de circuit ASIC (400) ;
sélectionner l'un parmi le module de régulateur linéaire (402) ou le module de régulateur sans bouchon (406) en vue de fournir une puissance au dispositif de circuit ASIC (400) au cours de la mise sous tension du dispositif de circuit ASIC (400) ;
achever la mise sous tension du dispositif de circuit ASIC (400) ; et
sélectionner l'un parmi le module de régulateur linéaire (402) ou le module de régulateur sans bouchon (406) en vue de fournir une puissance au dispositif de circuit ASIC postérieurement à la mise sous tension du dispositif de circuit ASIC ;
dans lequel le dispositif de circuit ASIC (400) est initialement configuré de manière à utiliser une sélection par défaut de l'un parmi le module de régulateur linéaire (402) ou le module de régulateur sans bouchon (406) préalablement à l'achèvement de la mise sous tension initiale d'au moins une partie du dispositif de circuit ASIC (400).

8. Mémoire selon la revendication 7, dans laquelle le module de régulateur sans bouchon (406) inclut au moins un premier sous-module de régulateur sans bouchon (602) et un second sous-module de régulateur sans bouchon (604), le premier sous-module de régulateur sans bouchon (602) étant configuré de manière à fournir jusqu'à un premier niveau de courant électrique et le second sous-module de régulateur sans bouchon (604) étant configuré de manière à fournir jusqu'à un second niveau de courant électrique, et dans les cas où le module de régulateur sans bouchon est sélectionné, la sélection consiste en outre à :
sélectionner le premier sous-module de régulateur sans bouchon (602) du module de régulateur sans bouchon en vue d'alimenter le dispositif de circuit ASIC au cours de la mise sous tension.

9. Procédé selon la revendication 7, dans lequel le module de régulateur linéaire (402) inclut au moins un premier sous-module de régulateur linéaire (502) et un second sous-module de régulateur linéaire (504), le premier sous-module de régulateur linéaire (502) étant configuré de manière à fournir jusqu'à un premier niveau de courant électrique, et le second sous-module de régulateur linéaire (504) étant configuré de manière à fournir jusqu'à un second niveau de courant électrique, et dans lequel, dans les cas où le module de régulateur linéaire (402) est sélectionné, la sélection consiste en outre à :
sélectionner le premier sous-module de régulateur linéaire (502) du module de régulateur linéaire (402) en vue d'alimenter le dispositif de circuit ASIC (400) au cours de la mise sous tension.

10. Procédé selon la revendication 8 ou 9, dans lequel le premier niveau de courant électrique est inférieur au second niveau de courant électrique.

11. Procédé selon la revendication 7, dans lequel la sélection répond à un état d'une broche couplée au dispositif de circuit ASIC (400).

12. Procédé selon la revendication 7, dans lequel la sélection répond à un état stocké d'un registre de configuration accessible par le dispositif de circuit ASIC (400).
